# EUROPEAN PATENT APPLICATION

(11) **EP 4 203 231 A1**
(43) Date of publication of application: **28.06.2023**
(21) Application number: 21216596.3
(22) Date of filing: 21.12.2021
(51) Int. Cl.: H02J 7/00, B60L 3/00, B60L 50/64, B60L 58/12, B60L 58/18

(54) **MODULAR ENERGY SOURCE WITH BYPASS AND RECONFIGURATION FUNCTIONALITY AND METHOD OF OPERATING A MODULAR ENERGY SOURCE**

(71) Applicant: Airbus (S.A.S.), 31700 Blagnac (FR)
(72) Inventor: Kapaun, Florian, 82024 Taufkirchen (DE); Steiner, Gerhard, 82024 Taufkirchen (DE)
(74) Representative: KASTEL Patentanwälte PartG mbB

(57) **Abstract**

A modular energy source (10) with bypass and reconfiguration functionality, comprises an arrangement of energy source modules (12, 13) connected in series for providing electrical energy to an electric network (11), and a number of bypass and balancing units (14, 15), each being configured for bypassing an assigned energy source module (12, 13). Each bypass and balancing unit (14, 15) comprises a first switch (16, 17) connected in series with its assigned energy source module (12, 13) for isolating it in case of a failure of that module, and a second switch (18, 19) connected in parallel to the first switch (16, 17) and to its assigned energy source module (12, 13) for bypassing that module when it is isolated. A method of operating the modular energy source (10) comprises isolating at least one of the energy source modules (12, 13) in case of a failure of that module, and bypassing that module (12, 13) when it is isolated.

## Description

The invention relates to a modular energy source with bypass and reconfiguration functionality and to a method of operating a modular energy source. In particular, the invention can be applied for propelling an aircraft.

In the field of power electronics still exist problems in operating and protecting energy sources with a module-based design. Especially for energy sources like stacked battery and fuel cell modules, frontends solving these problems are useful to enhance the availability and performance of the system.

A battery or other cell-based energy source consists of a large number of cells, where many cells are connected in series to achieve the necessary electrical voltage, and are connected in parallel to achieve the electrical current needed.

Battery and other energy source systems often come with a brick-based design. This means that e.g. a high voltage battery has several battery modules which are connected in series. A battery module may e.g. consist of N cells connected in series and M cells connected in parallel. A battery system may consist of several battery modules connected in series.

It may happen that single cells have faults, which may e.g. be within the cell, or concern their contacting, or which are resulting from a thermal overload, and others.

The cells are not equal but show quite often different behaviours. Usually a fault may occur within one cell first and then spreads to the whole battery. In this case it is necessary to isolate the concerned cell or cells from the other cells as quickly as possible.

The defective cell shall not be further burdened, but it should be guaranteed that the energy source system is able to further supply power so that it is possible to continue e.g. electric driving or flying, depending on the field of application. That means, the defect part shall be isolated and a further operation with reduced power shall be possible.

Due to the different properties of the cells of an energy source, the cells usually drift apart, i.e. they diverge. For example, if a plurality of cells are connected in series and are being discharged to provide electrical power to an electric network, the weakest cell defines the energy which can be extracted. Therefore, when the first cell reaches a critical threshold, it is necessary to switch off that cell, while all other cells are still having a higher voltage. The weakened cell shall not be further discharged because it would be destroyed in this case.

When operating an energy source comprising a plurality of cells, it is always an objective that the cells are all balanced that means that all cells have the same voltage at the beginning and during further operation, so that it is possible to extract as much energy as possible. In order to avoid that different cells which are connected in series and which may drift apart, e.g. due to their different capacities, self-balancing is made. A survey unit formed by a Battery Management System (BMS) observes the voltages of the single cells and detects which cells are okay and which cells have a deviating voltage.

During charge, since the cells are connected in series, it is only possible to charge all cells with the same charge current. But due to their different capacities they may drift apart from each other during charge operation.

The battery management system detects that one or more cells of the system have not enough voltage and must be specifically recharged. This is usually done with very low currents on cell level and it is only possible in one direction. That means that those cells having too much voltage will be discharged, or those cells which have not enough voltage are charged, depending on the BMS. This cannot be done efficiently during normal operation of the energy supply system. Further, it can be made only with very low electrical power.

Two modes can be described:
1. Battery system discharge / energy source operation:
   A common way to ensure enhanced availability of a battery system in case of malfunctioning of battery modules is to connect a diode antiparallel to each battery module. In case of failure, this diode provides an additional current path, which bypasses the defect battery module and therefore enables further discharge operation of the complete battery system. In case of failure, the according losses in the diode have to be considered.
2. Battery system charge / reverse current blocking:
   During charge mode of the battery, the BMS monitors the different cell levels. In case of malfunctioning of a battery module, a cell undervoltage might be detected by the BMS which directly stops operation and thus prevents the whole battery system from further usage. Same appears in terms of cell-overvoltage. The same effect occurs if the system is used as energy storage in case of reverse energy flowing, e.g. in case of decelerating of propeller.

The overall system, which is e.g. a propulsion system of an aircraft, a car or a ship etc., is designed to be able to operate at a lower voltage in emergency cases, due to bypassed energy modules.

It is the objective of the invention to overcome the problems described above. In particular, a solution for reconfiguration and protecting energy sources shall be found, which provides improved flexibility as well as enhanced performance, and enhanced availability of an energy source in case of emergency scenarios.

According to a first aspect, the invention provides a modular energy source with bypass and reconfiguration functionality, comprising an arrangement of energy source modules connected in series for providing electrical energy to an electric network, and a number of bypass and balancing units, each being configured for bypassing an assigned energy source module, wherein each bypass and balancing unit comprises a first switch connected in series with its assigned energy source module for isolating it in case of a failure of that module, and a second switch connected in parallel to the first switch and to its assigned energy source module for bypassing that module when it is isolated.

Preferably, the modular energy source comprises a battery system.

Preferably, the modular energy comprises a fuel cell system.

Preferably, the modular energy comprises a super capacitor system.

Preferably, each energy source module comprises a number of energy cells connected in series and a number of energy cells connected in parallel.

Preferably, the first switch and the second switch are configured as semiconductor switches.

Preferably, the first switch and/or the second switch comprises a MOSFET or an IGBT module comprising an antiparallel diode.

Preferably, the first switch and/or the second switch is configured for blocking a current in two directions when switched off.

Preferably, the first switch of each bypass and balancing unit is configured to block a current flow during module balancing in case of bypassing that module.

Preferably, the second switch is configured for bypassing its assigned energy source module during charging if an end-of-charge voltage is reached.

Preferably, the modular energy source is configured for power balancing at energy source module level.

According to a second aspect, the invention provides a method of operating a modular energy source comprising an arrangement of energy source modules connected in series for providing electrical energy to an electric network, the method comprising the steps: isolating at least one of the energy source modules in case of a failure of that module, and bypassing that module when it is isolated.

Preferably, bypassing the at least one energy source module is performed by a bypass and balancing unit assigned to that energy source module.

Preferably, the modular energy source is configured according to the invention.

According to a third aspect, the invention provides an aircraft comprising a modular energy source according to the invention.

The invention provides a solution for reconfiguration and protecting energy sources. The solution according to the invention provides improved flexibility as well as enhanced performance, combined with low weight compared to existing solutions. In particular, the invention provides enhanced availability of an energy source in case of emergency scenarios. Moreover, the invention relaxes a lot the requirements to a contactor based solution in terms of required timing.

Characteristics and advantages described in relation to the modular energy source are also related to the method and vice versa.

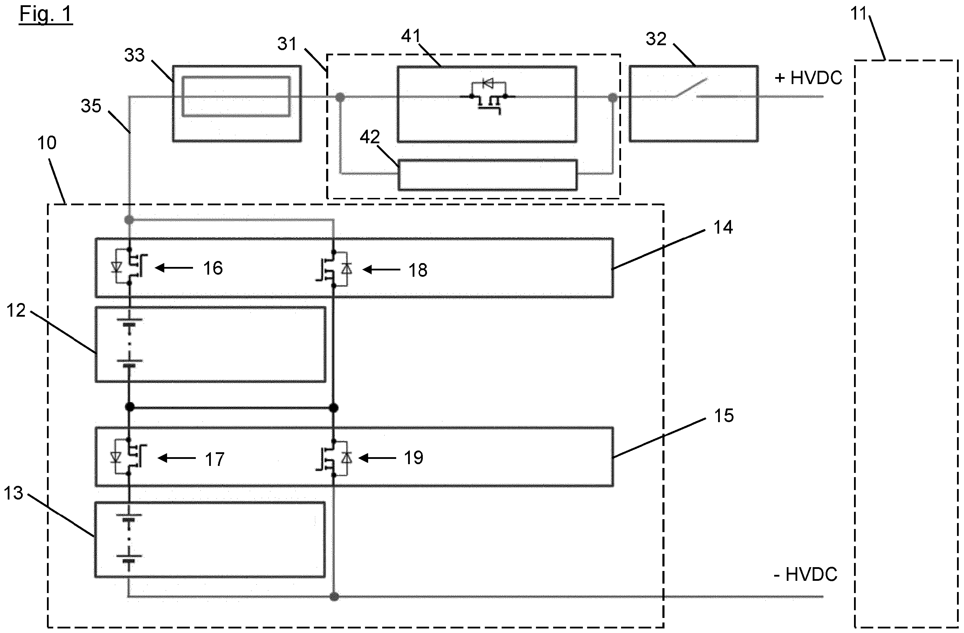

In the following, an exemplary embodiment showing further advantages and characteristics is described in detail with reference to
- **Fig. 1**: which shows a schematic structural diagram of a modular energy source with bypass and reconfiguration functionality according to a particularly preferred embodiment of the invention.

The example described herein refers to batteries as energy sources. The topology however is applicable to all sources which are built with series-connected bricks or modules, like e.g. fuel cells.

**Figure 1** depicts a modular energy source 10 for providing electrical energy to an electric network 11. The modular energy source 10 comprises an arrangement of energy source modules 12, 13 connected in series for providing the electrical energy to the electric network 11. In the figure, only two energy source modules are shown for simplification of the graphic representation. In fact, a large number of such modules may be arranged in series, depending on the voltage level needed.

Each energy source module 12, 13 is assigned to a bypass and balancing unit 14, 15, which is configured for bypassing the assigned energy source module 12, 13. In the example shown here, first bypass and balancing unit 14 is assigned to first energy source module 12, while second bypass and balancing unit 15 is assigned to second energy source module 15 is assigned to second energy source module 14. Further pairs of energy source modules and bypass and balancing units may be connected in series thereto.

The first bypass and balancing unit 14 comprises a first switch 16 connected in series with its assigned first energy source module 12 for isolating it in case of a failure of that module. A second switch 18 of the first bypass and balancing unit 14 is connected in parallel to the first switch 16 and to its assigned first energy source module 12 for bypassing that module when it is isolated.

In the same way, the second bypass and balancing unit 15 comprises a first switch 17 connected in series with its assigned second energy source module 13 for isolating it in case of a failure of that module. A second switch 19 of the second bypass and balancing unit 15 is connected in parallel to the first switch 17 and to its assigned second energy source module 13 for bypassing that module when it is isolated.

The electric network 11 connected to modular energy source 10 is a high voltage DC network. As additional protection and safety means, a breaker unit 31 comprising a short circuit protection switch 41 connected parallel to a precharge circuit 42, a power contactor 32 and a fuse 33 may be provided in series in a power line 35 connecting the modular energy source 10 to electric network 11. Further, a control system not shown in the figure, e.g. in form of a battery management system (BMS), is provided to survey the status of the energy source modules 12, 13 and controlling the switches 16-19 of the bypass and balancing units 14, 15 accordingly.

Each energy source module 16, 17 comprises a number of N energy cells connected in series and a number of M energy cells connected in parallel.

In the example shown here, the modular energy source 10 comprises a battery system. In this case, each energy source module 16, 17 is formed by a battery module wherein the energy cells are formed by battery cells. In another preferred embodiment, the modular energy source 10 comprises a fuel cell system. In that case, each energy source module 16, 17 is formed by a fuel cell module wherein the energy cells are formed by fuel cells. Generally, also other energy sources and energy storage systems can be used as the modular energy source 10, like e.g. super capacitors or super capacitor modules.

For fuel cells, no reverse current is allowed, so that the function is limited to reconfiguration scenarios during energy sourcing and to protect against reverse current flow.

The first switch 16, 17 and the second switch 18, 19 of each bypass and balancing unit 14, 15 are configured as semiconductor switches. The switches may e.g. be formed as MOSFETs having a body diode, but also as IGBT modules usually comprising an antiparallel diode. Different types of semiconductor switches may be used in the bypass and balancing units 14, 15.

Further, it is also possible that the first switch 16, 17 and/or the second switch 18, 19 is configured for blocking a current in two directions when switched off.

The first switch 16, 17 of each bypass and balancing unit 14, 15 blocks current flow during module balancing in case of bypassing the assigned module. The second switch 18, 19 allows bypassing its assigned energy source module during charge of the module when an end-of-charge voltage is reached. Further, it is configured for power balancing at energy source module level.

The main functionalities of the modular energy source can be described as follows:
The first switches 16, 17 form module series switches which isolate the respective module or battery module in case of internal failures and blocks current flow during module balancing in case of bypassing the defective module, i.e. when the respective switch 18 or 19 assigned to that module is closed.

The second switches 18, 19 form module bypass and balancing switches which allow bypassing the defective module or battery module to which they are assigned in case of module failures leading to high impedance and/or module deactivation (e.g. high series resistance due to weak connection, low cell voltage, overheating, etc.)

The second switches 18, 19 further allow bypassing the respective module or battery module 12, 13 during charging in case of end-of-charge voltage reached, overtemperature disconnection during charging, etc. Therefore, a fast power-balancing at battery module level is possible.

The switches of each module can show different states, depending on the operation configuration. During operation, second switches 18, 19 will only be activated if first switches 16, 17 are deactivated to avoid battery module short circuiting.

An example of a method of operating the modular energy source 10 comprising energy source modules 12, 13 connected in series for providing electrical energy to electric network 11 is described in the following:
During nominal operation only first switches 16, 17 are switched on. Ideally, they have a low forward resistance.

For example, an error may occur in module 12. Now, that module shall be separated, but the functionality of the whole modular energy source shall be retained.

In this case, first switch 16 is opened so that the current can no longer flow here and thus is blocked from flowing through its assigned module 12. In order to continue supplying the network 11, module 12 is bypassed now by switching on switch 18. In this state the current bypasses module 12, and further goes through module 13 and the further modules of the modular energy source 10. In sum, the defective module 12 is taken out and bypassed.

Bypass is possible in both directions, i.e. if electrical energy is coming from the network 11 and shall be stored in the modular energy source 10. Depending on the type of semiconductor switch used, it may be configured to block the current in both directions when disabled.

The topology shown in figure 1 provides enhanced availability of an electrical energy or battery system in case of emergency scenarios.

The invention provides in particular a high-power balancing on module level. This minimizes turn-around times during daily operation. By balancing on battery module level, the necessary battery system balancing time is minimized.

Balancing on cell level can be made additionally with the BMS, independently from the balancing on module level. To avoid driving the BMS into a failure state in case of bypassing a battery module, the BMS and the control logic of the bypass switches are communicating the actual state of operation.

With the modular energy source described above, which allow balancing on module level, whole units or modules can be balanced, each comprising a large number of cells in series and parallel. They can be actively balanced, with essentially higher performance than hitherto.

In addition, balancing can be done during operation and with the complete nominal current. That means that during operation, for example if a motor in the electric network 11 recuperates or supplies feedback, it is possible to fully balance on the different modules. In case of a fault it is possible to completely remove single modules from the circuit.

### List of reference numbers:

- 10: energy source
- 11: electric network
- 12, 13: energy source modules
- 14, 15: balancing units
- 16, 17: first switch
- 18, 19: second switch
- 31: breaker unit
- 32: power contactor
- 33: fuse
- 35: power line
- 41: short circuit protection switch
- 42: precharge circuit

## Claims

1. Modular energy source with bypass and reconfiguration functionality, comprising
an arrangement of energy source modules (12, 13) connected in series for providing electrical energy to an electric network (11), and
a number of bypass and balancing units (14, 15), each being configured for bypassing an assigned energy source module (12, 13),
wherein each bypass and balancing unit (14, 15) comprises a first switch (16, 17) connected in series with its assigned energy source module (12, 13) for isolating it in case of a failure of that module,
and a second switch (18, 19) connected in parallel to the first switch (16, 17) and to its assigned energy source module (12, 13) for bypassing that module when it is isolated.

2. Modular energy source according to claim 1, **characterized in that** it comprises a battery system.

3. Modular energy source according to claim 1 or 2, **characterized in that** it comprises a fuel cell system.

4. Modular energy source according to one of the preceding claims, **characterized in that** it comprises a super capacitor system.

5. Modular energy source according to one of the preceding claims, **characterized in that** each energy source module (12, 13) comprises a number of energy cells connected in series and a number of energy cells connected in parallel.

6. Modular energy source according to one of the preceding claims, **characterized in that** the first switch (16, 17) and the second switch (18, 19) are configured as semiconductor switches.

7. Modular energy source according to claim 6, **characterized in that** the first switch (16, 17) and/or the second switch (18, 19) comprises a MOSFET or an IGBT module comprising an antiparallel diode.

8. Modular energy source according to claim 6 or 7, **characterized in that** the first switch (16, 17) and/or the second switch (18, 19) is configured for blocking a current in two directions when switched off.

9. Modular energy source according to one of the preceding claims, **characterized in that** the first switch (16, 17) of each bypass and balancing unit (14, 15) is configured to block current flow during module balancing in case of bypassing that module.

10. Modular energy source according to one of the preceding claims, **characterized in that** the second switch (18, 19) is configured for bypassing its assigned energy source module (12, 13) during charging if an end-of-charge voltage is reached.

11. Modular energy source according to one of the preceding claims, **characterized in that** it is configured for power balancing at energy source module (12, 13) level.

12. Method of operating a modular energy source comprising an arrangement of energy source modules (12, 13) connected in series for providing electrical energy to an electric network, the method comprising the steps:
isolating at least one of the energy source modules (12, 13) in case of a failure of that module, and bypassing that module (12, 13) when it is isolated.

13. Method according to claim 12, **characterized in that** bypassing the at least one energy source module (12, 13) is performed by a bypass and balancing unit (14, 15) assigned to that energy source module (12, 13).

14. Method according to claim 12 or 13, **characterized in that** the modular energy source is configured according to one of claims 1 to 11.

15. Aircraft, **characterized by** a modular energy source according to one of claims 1 to 11.
